# EUROPÄISCHE PATENTSCHRIFT

(11) **EP 2 511 569 B1**
(45) Veröffentlichungstag und Bekanntmachung des Hinweises auf die Patenterteilung: **23.11.2016**
(21) Anmeldenummer: 12158993.1
(22) Anmeldetag: 12.03.2012
(51) Int. Cl.: F16H 3/54, F16H 3/66

(54) **ANTRIEBSVORRICHTUNG MIT WENIGSTENS EINER ELEKTRISCHEN MASCHINE**
DRIVING DEVICE HAVING AT LEAST AN ELECTRIC MACHINE
DISPOSITIF D'ENTRAÎNEMENT COMPORTANT AU MOINS UNE MACHINE ÉLECTRIQUE

(30) Priorität: 13.04.2011 DE 102011007262
(43) Veröffentlichungstag der Anmeldung: 17.10.2012
(73) Patentinhaber: Schaeffler Technologies AG & Co. KG, 91074 Herzogenaurach (DE)
(72) Erfinder: Smetana, Tomas, 91074 Herzogenaurach (DE); Biermann, Thorsten, 96193 Wachenroth (DE)

(56) Entgegenhaltungen:
- WO-A1-2007/110204
- WO-A1-2011/000346
- WO-A1-2011/082707
- CN-U- 201 672 012
- CN-U- 201 672 014
- JP-A- 2001 039 179
- KR-A- 20090 127 493
- US-A- 4 479 404

## Beschreibung

### Gebiet der Erfindung

Die Erfindung betrifft eine Antriebsvorrichtung mit wenigstens einer elektrischen Maschine, mit mindestens einem Planetentrieb, mit einem Differenzial und mit einer um eine Rotationsachse Drehmomente übertragenden Wirkverbindung zwischen einer Antriebswelle der elektrischen Maschine und dem Planetentrieb und einer weiteren Drehmomente übertragenden Wirkverbindung zwischen dem Planetentrieb und dem Differenzial, wobei der Planetentrieb zumindest aus einer ersten Anschlusswelle, einer zweiten Anschlusswelle, aus wenigstens einem Satz Planeten an der zweiten Anschlusswelle und aus einer dritten Anschlusswelle gebildet ist, wobei die Antriebswelle und die erste Anschlusswelle des ersten Planetentriebs auf der Rotationsachse koaxial zueinander ausgerichtet sind.

### Hintergrund der Erfindung

WO2011/000346 wird als nächst liegender Stand der Technik angesehen. US 4,479,404 A zeigt eine Antriebsvorrichtung, die aus einer elektrischen Maschine, aus einem Zweigang-Planetengetriebe und aus einem Differenzial gebildet ist. Die elektrische Maschine und das Zweigang-Planetengetriebe sind koaxial zueinander angeordnet und miteinander wirkverbunden. Die elektrische Maschine ist über das Zweigang-Planetengetriebe mit dem Differenzial wirkverbunden.

Das Zweigang-Planetengetriebe besteht aus zwei Planetentrieben. Der erste Planetentrieb weist drei Anschlusswellen auf.

Unter Anschlusswellen oder angeschlossene Wellen versteht der Fachmann in Planetengetrieben Antriebswellen, Abtriebswellen und auch als Reaktionsglieder bezeichnete Festglieder. Derartige Anschlusswellen können sein: auch als Zentralräder bezeichnete Sonnenräder, auch als Stege bezeichnete Planetenträger und Hohlräder [siehe dazu "Zahnradgetriebe" J. Loomann, dritte erweiterte Ausgabe von 1996, Kapitel 3.1. Begriffsbestimmungen und Bezeichnungen]

In dem betrachteten Fall ist eine erste Anschlusswelle des ersten Planetentriebs ein Sonnenrad. Die erste Anschlusswelle des ersten Planetentriebes ist durch die Antriebswelle der elektrischen Maschine antreibbar. Die zweite Anschlusswelle ist ein Planetenträger, an dem ein Satz Planetenräder rotierbar gelagert ist. Die dritte Anschlusswelle ist ein Hohlrad. Der Planetenträger des ersten Planetentriebs ist rotationsfest mit einem weiteren Sonnenrad, also mit einer Anschlusswelle des zweiten Planetentriebs, verbunden und mit diesem gemeinsam um die Rotationsachse rotierbar.

Der zweite Planetentrieb umfasst außer dem Sonnenrad einen Satz Planetenräder, ein Hohlrad und einen Planetenträger. Das Hohlrad des zweiten Planetentriebs ist gegenüber einem der Gehäuseabschnitte rotationsfest befestigt und ist damit nach oben genannter Definition ein Festglied.

Zwischen der als Hohlrad ausgebildeten dritten Anschlusswelle des ersten Planetentriebs und einem der Gehäuseabschnitte ist eine Freilaufkupplung angeordnet. Außerdem steht das Hohlrad des ersten Planetentriebs in einer Wirkverbindung mit einer Scheibenbremse, so dass diese dritte Anschlusswelle durch die Bremse als Reaktionsglied rotationsfest am Gehäuseabschnitt gehalten werden kann. Weiterhin steht die dritte Anschlusswelle über eine Kupplung in einer Wirkverbindung mit einer Anschlusswelle des zweiten Planetentriebs. Über die Kupplung kann eine um die Rotationsachse Drehmomente übertragende Verbindung zwischen dem Hohlrad des ersten Planetentriebs und dem Planetenträger des zweiten Planetentriebs hergestellt werden. Der Planetenträger des zweiten Planetentriebs ist mit dem Differenzialkorb des Kegelraddifferenzials rotationsfest verbunden - beide sind zusammen um die Rotationsachse rotierbar.

Die Rotationsachse ist Hauptachse der Antriebsvorrichtung, zugleich Rotationsachse der Antriebswelle der elektrischen Maschine und auch zugleich zentrale Rotationsachse des jeweiligen Planetentriebs. Die elektrische Maschine, die Planetentriebe und das Kegelraddifferenzial sind bezüglich der Rotationsachsen koaxial zueinander angeordnet, wobei die Rotationsachse des Kegelraddifferenzials mit den Zentralachsen der Achswellenräder und damit mit der Rotationsachse des Differenzialkorbs übereinstimmt.

Das Differenzial ist ein klassisches Kegelraddifferenzial, über das Drehmomente von einem Differenzialkorb über Ausgleichskegelräder an Achswellenkegelräder einer linken und einer rechten Achswelle verteilt werden. Die Achswellen sind mit angetriebenen Rädern eines Fahrzeugs verbunden, können aber auch, wenn das Differenzial in einem Verteilergetriebe eingesetzt ist, zu angetriebenen Achsen führen. Eine der Achswellen steckt konzentrisch in der als Hohlwelle ausgebildeten Antriebswelle (Rotorwelle).

### Beschreibung der Erfindung

Die Aufgabe der Erfindung besteht darin, eine variable einsetzbar Antriebsvorrichtung zu schaffen, die sich einfach montieren lässt und die kompakt ist.

Die Aufgabe ist durch den Gegenstand des Anspruchs 1 gelöst.

Erfindungsgemäß ist eine schaltbare Kupplung zwischen zwei der Anschlusswellen des Planetentriebs angeordnet. Der Begriff Anschlusswelle ist im Kapitel "Hintergrund der Erfindung" nach *'Loomann'* definiert. Mit der Kupplung ist eine um die Rotationsachse Drehmomente übertragende Wirkverbindung wahlweise zwischen der ersten Anschlusswelle und der zweiten Anschlusswelle oder zwischen der zweiten Anschlusswelle und der dritten Anschlusswelle herstellbar.

Unter Drehmomente übertragende Verbindung ist Reibschluss, Kraftschluss, Formschluss oder magnetische Haftung zwischen den Anschlusswellen oder zwischen mit den Anschlusswellen verbundenen Elementen zu verstehen, die in der Lage sind, mit oder ohne Schlupf Drehmomente von einer der Anschlusswellen auf die andere der Anschlusswellen weiterzugeben. Kupplungen sind Ein- oder Mehrscheiben, Nass- oder Trockenkupplungen, Klauen- oder Magnetkupplungen bzw. andere geeignete Kupplungen. Die Elemente der Kupplung wie Reibscheiben oder Lamellen, Druckplatten, Kupplungskörper usw. sind vorzugsweise ringförmig ausgebildet und konzentrisch zur Rotationsachse angeordnet.

Der Planetentrieb kann in einfachster Form aus den drei Anschlusswellen und einem Satz Planetenrädern gebildet sein oder kann mehr Anschlusswellen und mehr Planetensätze aufweisen.

Die Rotationsachse ist Hauptachse der Antriebsvorrichtung, zugleich Rotationsachse der Antriebswelle der elektrischen Maschine und auch zugleich zentrale Rotationsachse des Planetentriebs.

Der Vorteil der Erfindung liegt darin, dass durch Einrücken oder Ausrücken der Kupplung die beiden Anschlusswellen mindestens zwei verschiedene Betriebszustände (Gänge) des Mehrgang-Planetengetriebes schaltbar sind. In diesem Sinne sieht eine Ausgestaltung der Erfindung vor, dass die erste Anschlusswelle ein Sonnenrad ist, welches im Zahneingriff mit wenigstens einem Satz Planetenrädern steht. Die zweite Anschlusswelle ist ein Planetenträger, an welchem die Planetenräder um eigene Rotationsachsen drehbar in dem Planetenträger oder auf am Planetenträger fest bzw. drehbaren Planetenbolzen gelagert sind. Die dritte Anschlusswelle ist ein Hohlrad, mit dessen Innenverzahnung die Planetenräder im Zahneingriff stehen.

Eine Ausgestaltung der Erfindung sieht vor, dass zwischen einer der Anschlusswellen, welche mit einer weiteren Anschlusswelle über die Kupplung Drehmomente übertragend verbindbar ist, und der Antriebswelle der elektrischen Maschine eine permanente Drehmomente übertragende Verbindung ausgebildet ist. Der Vorteil dieser Anordnung besteht darin, dass bei eingerückter Kupplung zwei der Anschlusswellen eines Planetentriebs miteinander verbunden sind und der Planetentrieb somit blockierbar ist. In diesem Fall ist die über- oder untersetzende Wirkung des Planetentriebs aufgehoben und es kann eine direkte 1: 1 übertragende Verbindung zwischen der elektrischen Maschine und dem Differenzial hergestellt werden.

Alternativ ist es denkbar, dass in dem Schaltgetriebe mehrere Planetentriebe oder Getriebestufen ausgebildet sind, so dass durch Aufheben der Wirkung des Planetentriebs eine durch die anderen Getriebestufen bestimmte Unter- oder Übersetzung zwischen der elektrischen Antriebsmaschine und dem Differenzial gewählt werden kann.

Bei eingerückter Kupplung ist eine Drehmomenten übertragende Verbindung zwischen der ersten Anschlusswelle, also zwischen dem Sonnenrad oder der drehfest mit dieser verbundenen Antriebswelle und dem Planetenträger herstellbar. Treibt die elektrische Maschine in diesem Betriebszustand das Sonnenrad an, bleiben das Sonnenrad und die mit dem Sonnenrad im Zahneingriff stehenden Planetenräder gegeneinander unbeweglich, da der Planetenträger nicht relativ zum Sonnenrad um die Rotationsachse rotieren kann. Der Planetentrieb ist damit überbrückt, Hohlrad, Planetenträger und Sonnenrad rotieren gemeinsam, so dass von der Antriebswelle ausgehende Drehmomente oder Drehzahlen in der Wirkverbindung zwischen der elektrischen Maschine und dem Differenzial mit dem insgesamt umlaufenden Planetentrieb 1:1 weiter gegeben werden können.

Alternativ ist bei eingerückter Kupplung eine Drehmomenten übertragende Verbindung zwischen dem Planetenträger und dem Hohlrad herstellbar, wobei die beiden miteinander gekuppelten Anschlusswellen miteinander gemeinsam um die Rotationsachse drehbar sind. Treibt die elektrische Maschine das Sonnenrad in diesem Betriebszustand an, bleiben Planetenräder, Hohlrad und Planetenträger gegeneinander unbeweglich, da sich der Planetenträger nicht relativ zum Hohlrad bewegen kann. Die Wirkung des Planetentriebes ist damit aufgehoben, so dass, wie in der zuvor beschrieben Anordnung auch, von der Antriebswelle ausgehende Drehmomente oder Drehzahlen in der Wirkverbindung zwischen der elektrischen Maschine und dem Differenzial mit dem Planetentrieb 1:1 weiter gegeben werden können.

Eine weitere Ausgestaltung der Erfindung sieht vor, dass mindestens eine mit Druckmittel beaufschlagbare Betätigungseinrichtung für die Kupplung vorgesehen ist. Druckmittel sind Luft oder vorzugsweise hydraulische Flüssigkeiten. Die Betätigungseinrichtung weist wenigstens einen oder mehrere Druckkolben auf, die oder der mit Druck beaufschlagt längs verschiebbar ist/sind. Der/die Kolben sind entweder mit radialem Abstand zur Rotationsachse angeordnet oder vorzugsweise als Ringkolben ausgebildet und dabei konzentrisch zur Rotationsachse der Antriebswelle angeordnet. Der/die Kolben wirken zum Ein- bzw. Ausrücken auf Betätigungselemente wie Hebel, Druckplatten-, stifte oder auf Federn oder geben diese frei. Die Kolben drücken oder ziehen beim Einrücken oder Ausrücken der Kupplung.

Insbesondere der oder die Ringkolben sind bevorzugt längs der Rotationsachse relativ zur Antriebswelle längs beweglich. Zwischen dem Kolben und dem Betätigungselement kann wahlweise ein Kupplungsausrücklager angeordnet sein.

Der Kolben ist in einer mit dem Druckmittel befüllbaren Druckkammer längsbeweglich verschiebbar, die entweder in einem separaten Nehmerzylinder oder vorzugsweise in einer Zwischenwand eines Gehäuses der Antriebsvorrichtung, beispielsweise im Lagerschild der elektrischen Maschine ausgebildet. Das hat den Vorteil, dass die Betätigungseinrichtung auf engsten Bauraum ausgeführt werden kann und die Anzahl der zu montierenden Teile der Betätigungseinrichtung so gering wie möglich gehalten werden kann. Die Kosten für Transport, Lagerung der Teile und die Montage sind gering, ebenso wie die Montagezeiten.

Eine Ausgestaltung der Erfindung sieht mindestens eine mechanisch betätigte Betätigungseinrichtung für die Kupplung, wobei die Betätigungseinrichtung wenigstens einen linear wirkenden Aktor aufweist, welcher in Wirkverbindung mit einem Betätigungselement der Kupplung steht und mit dem die Kupplung ein- und/oder ausrückbar ist. Der Aktor ist wahlweise ein Hebel, ein Linearantrieb oder eine Kombination aus einem Stellantrieb und einem Stellwandler. Der Stellantrieb ist in dem Fall beispielsweise eine elektrische Maschine und der Stellwandler ist aus einer Schaltwalze gebildet, an der Rotationen in Linearbewegungen gewandelt werden.

Eine Ausgestaltung der Erfindung sieht eine Bremse zwischen einer der Anschlusswellen und einem Gehäuse der Antriebsvorrichtung, mittels der die Anschlusswelle gegenüber dem Gehäuse abbremsbar und festlegbar ist. Mit dem kombinierten Einsatz von Kupplung und Bremse durch Kuppeln oder Ausrücken der Kupplung und gleichzeitiges Bremsen oder Lösen der Bremse Schaltungen ist die Antriebsvorrichtung variabler gestaltet.

Eine Ausgestaltung der Erfindung sieht eine Bremse zwischen der dritten Anschlusswelle und einem Gehäuse der Antriebsvorrichtung vor. Mittels der Bremse ist die dritte Anschlusswelle gegenüber dem Gehäuse abbremsbar und festlegbar. Die Bremse ist eine nasse oder trockene Scheibenbremse, eine Band- oder Backenbremse, mit der die dritte Anschlusswelle direkt an dem Gehäuse oder indirekt an mit dem Gehäuse drehfest verbundenen Stützen gegenüber dem Gehäuse der Antriebsvorrichtung abbremsbar und festlegbar ist.

Die Bremse wird, wie schon für die Kupplung beschrieben, mechanisch betätigt oder alternativ Druckmittel betätigt. Die Betätigungseinrichtungen können wie die der Kupplung ausgebildet und angeordnet sein.

### Beschreibung der Zeichnungen

### 1. Figur 1 und Figuren 1a - 1d

### 1.1 Allgemeiner Aufbau der Antriebsvorrichtung

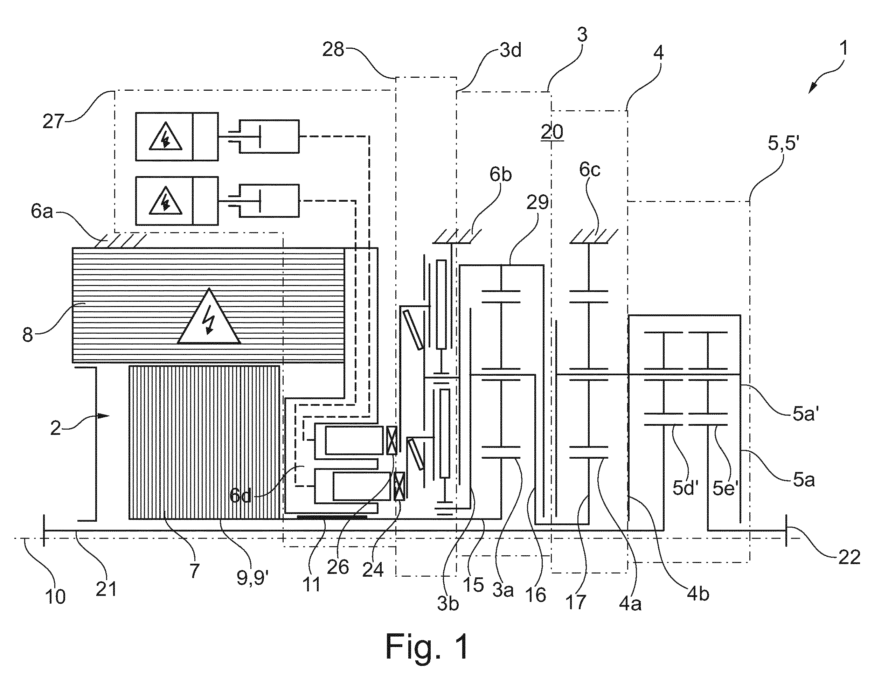

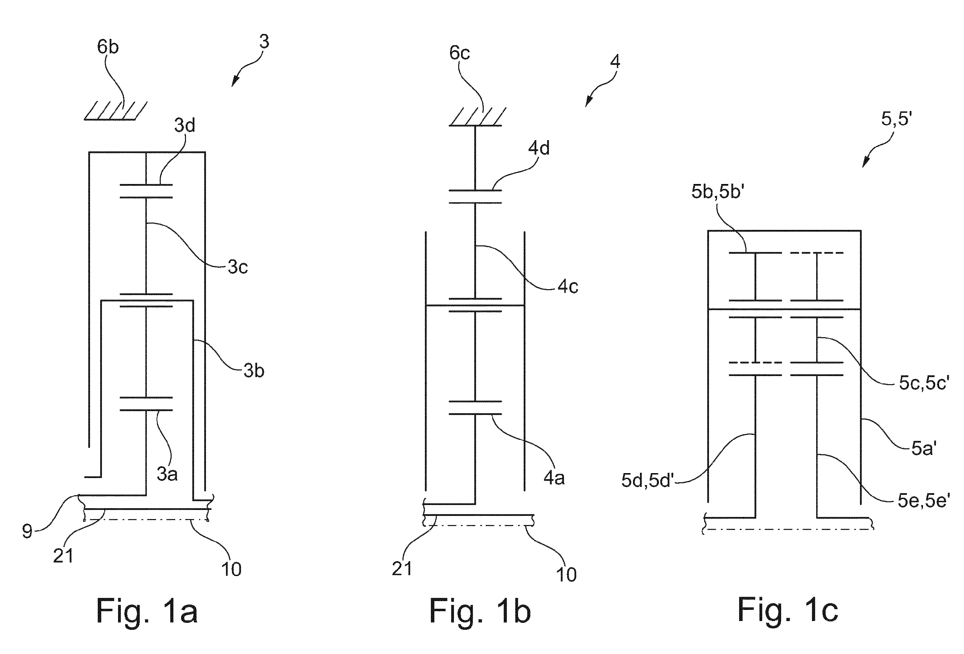

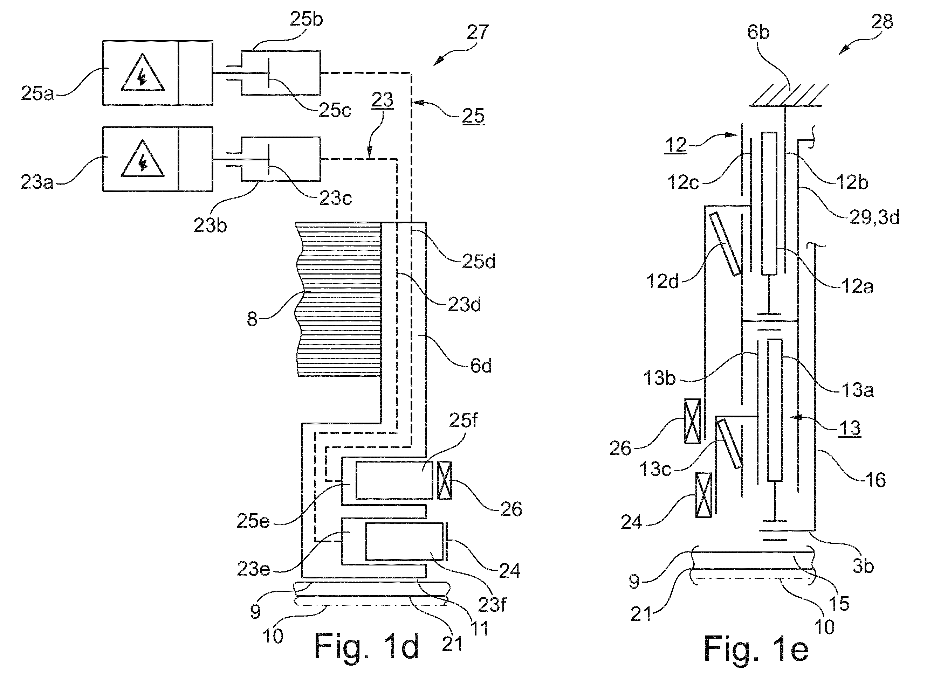

Figur 1 zeig schematisch einen Längsschnitt durch ein Ausführungsbeispiel einer Antriebsvorrichtung 1. Die Antriebsvorrichtung 1 weist eine elektrische Maschine 2, einen Betätigungsblock 27, einen Schaltblock 28, ein Zweigang-Planetengetriebe 20, und ein Differenzial 5 auf. Die elektrische Maschine 2, das Zweigang-Planetengetriebe 20 und das Differenzial 5 sind koaxial zueinander angeordnet und weisen als gemeinsame Hauptachse die Rotationsachse 10 bzw. eine axiale Verlängerung dieser, der Rotorwelle 9 und damit der Antriebswelle 9' auf.

### 1.2 Elektrische Maschine 2 und Gehäuse 6

Die elektrische Maschine 2 ist in einem Gehäuseabschnitt 6a eines in Figur 1 nicht vollständig dargestellten und mindestens dreiteilig aus den Gehäuseabschnitten 6a, 6b und 6c zusammengesetzten Gehäuses der Antriebsvorrichtung 1 aufgenommen und weist einen Rotor 7, einen Stator 8 und die Rotorwelle 9 auf. Die nur symbolisch angedeuteten und nicht näher dargestellten Gehäuseabschnitte 6a, 6b und 6c sind beispielsweise zur Bildung des Gehäuses der Antriebsvorrichtung miteinander verschraubt. Der Stator 8 sitzt zumindest rotationsfest in dem Gehäuseabschnitt 6a. Der Rotor 7 sitzt konzentrisch zumindest rotationsfest auf der Rotorwelle 9. Die Rotorwelle 9 ist mit dem Rotor 7 um die Rotationsachse 10 relativ zu dem Stator 8 drehbar an einer Lagerstelle 11 in einer als Lagerschild der elektrischen Maschine 2 ausgeführten Zwischenwand 6d des Gehäuses der Antriebsvorrichtung 1 gelagert. Die Zwischenwand 6d und der Stator 8 sind relativ zueinander unbeweglich, wobei die elektrische Maschine 2 und das Zweigang-Planetengetriebe 20 durch die Zwischenwand 6d räumlich voneinander getrennt sind.

### 1.3 Zweigang-Planetengetriebe 20 - Figuren 1, 1 a und 1 b

Das Zweigang-Planetengetriebe 20 weist einen ersten Planetentrieb 3 und einen zweiten Planetentrieb 4 auf.

Die Rotorwelle 9 ist Antriebswelle 9 der elektrischen Maschine 2 und ist mit einem Sonnenrad 3a des ersten Planetentriebs 3 wirkverbunden. Das um die Rotationsachse 10 rotationsfähige Sonnenrad 3a ist eine erste Anschlusswelle 15 des Planetentriebs 20 und ist permanent mit der Antriebswelle 9 entweder einteilig ausgebildet oder als separates Bauteil zur Antriebswelle 9 ausgebildet und mit dieser zumindest um die Rotationsachse 10 drehbar relativ zu dieser rotationsfest verbunden. Zweite Anschlusswelle 16 des ersten Planetentriebs 3 ist der um die Rotationsachse 10 rotationsfähige Planetenträger 3b, der mit einer Anschlusswelle 17 des zweiten Planetentriebs 4 wirkverbunden ist. Die Anschlusswelle 17 ist ein um die Rotationsachse 10 rotationsfähiges Sonnenrad 4a des zweiten Planetentriebs 4. Planetenträger 3b und Sonnenrad 4a sind entweder einteilig miteinander ausgebildet oder als jeweils separat ausgebildete Bauteile zumindest rotationsfest miteinander verbunden.

Das Zweigang-Planetengetriebe 20 ist mit dem Differenzial 5 über einen um die Rotationsachse 10 rotationsfähigen Planetenträger 4b des zweiten Planetentriebs 4 und einen Differenzialkorb 5a des Differenzials 5 wirkverbunden. Da das Differenzial 5 ein Planetendifferenzial 5' ist, ist der Differenzialkorb 5a der Planetenträger 5a' des Planetendifferenzials 5'.

Das Planetendifferenzial 5' ist über ein Sonnenrad 5d' mit einer Abtriebswelle 21 und über ein Sonnenrad 5e' mit einer Abtriebswelle 22 wirkverbunden. Die unabhängig voneinander um die Rotationsachse 10 rotationsfähigen Abtriebswellen 21 und 22 führen jeweils zu nicht dargestellten angetriebenen Rädern oder jeweils zu einer angetriebenen Welle eines Fahrzeugs.

### 1.4 Erster Planetentrieb 3 - Figuren 1 und 1a

In Figur 1 a ist der erste Planetentrieb 3 in einem Ausschnitt aus Figur 1 vergrößert dargestellt. Der erste Planetentrieb 3 ist aus dem Sonnenrad 3a, aus dem Planetenträger 3b, aus einem Satz Planeten 3c, von denen nur ein Planet dargestellt ist, und aus einem Hohlrad 3d gebildet. Der Planetenträger 3b und das Hohlrad 3d sind um die Rotationsachse 10 rotationsfähig in der Antriebsvorrichtung 1 gelagert. Die Planeten 3c sind auf Planetenbolzen drehbar an dem Planetenträger 3b gelagert und stehen im Zahneingriff mit dem Sonnenrad 3a und dem Hohlrad 3d.

### 1.5 Zweiter Planetentrieb 4 - Figuren 1 und 1 b

In Figur 1b ist der zweite Planetentrieb 4 in einem Ausschnitt aus Figur 1 vergrößert dargestellt. Der zweite Planetentrieb 4 ist aus dem Sonnenrad 4a, dem Planetenträger 4b, aus einem Satz Planeten 4c, von denen nur ein Planet dargestellt ist, und aus einem Hohlrad 4d gebildet. Die Planeten 4c sind auf Planetenbolzen drehbar an dem Planetenträger 4b gelagert und stehen im Zahneingriff mit dem Sonnenrad 4a und dem Hohlrad 4d. Der Planetenträger 4b ist um die Rotationsachse 10 rotationsfähig in der Antriebsvorrichtung gelagert. Das Hohlrad 4d ist an dem Gehäuseabschnitt 6c ortsfest gehalten.

### 1.6 Planetendifferenzial 5 - Figuren 1 und 1c

In Figur 1c ist das Planetendifferenzial 5' in einem Ausschnitt aus Figur 1 vergrößert dargestellt. Das Planetendifferenzial 5' ist aus dem Planetenträger 5a', aus zwei Sätzen Ausgleichsrädern 5b und 5c in Form von Planeten 5b' bzw. 5c' und aus den Abtriebsrädern 5d und 5e in Form der Sonnenräder 5d' und 5e' gebildet. Die Planeten 5b' des einen Planetensatzes stehen im Zahneingriff mit dem Sonnenrad 5d' und die Planeten 5c' mit dem Sonnenrad 5e'. Außerdem steht jeweils ein Planet 5b' des einen Satzes mit einem Planet 5c' des anderen Planetensatzes im Zahneingriff. Beide Sätze Planeten 5b' und 5c' sind auf Planetenbolzen an dem Planetenträger 5a' drehbar gelagert. Die Sonnenräder 5d' und 5e' sind rotationsfest mit den Abtriebswellen 21 bzw. 22 verbunden. Der Planetenträger 5a' und die Sonnenräder 5d' und 5e' sind drehbar in der Antriebsvorrichtung 1 gelagert.

### 1.7 Schaltblock 28 -Figuren 1 und 1 e

In Figur 1e ist der Schaltblock 28 in einem Ausschnitt aus Figur 1 vergrößert dargestellt. Der Schaltblock 28 ist durch eine Bremse 12 und eine Kupplung 13 gebildet. Bremse 12 und Kupplung 13 sind konzentrisch ineinander auf der Rotationsachse 10 angeordnet, wobei die Bremse 12 radial außen angeordnet ist.

### 1.8 Kupplung 13 - Figuren 1 und 1e

Die Kupplung 13 weist ein erstes Kupplungselement 13a auf, das um die Rotationsachse 10 rotationsfähig ist und rotationsfest mit dem Planetenträger 3b verbunden ist aber längs entlang der Rotationsachse 10 relativ zu dem Planetenträger 3b und zu dem Hohlrad 3d beweglich ist. Weiterhin ist die Kupplung 13 mit einer Druckplatte 13b versehen, welche um die Rotationsachse 10 drehfest mit dem Hohlrad 3d verbunden aber längs entlang der Rotationsachse 10 relativ zu dem Hohlrad 3d und zu dem Planetenträger 3b verschiebbar angeordnet ist. Das Kupplungselement 13a ist beispielsweise eine Kupplungsscheibe mit Reibbelägen. Zwischen der Druckplatte 13b und dem Hohlrad 3d ist eine Druckfeder 13c eingespannt.

### 1.9 Bremse 12 -Figuren 1 und 1 e

Die Bremse 12 weist eine Bremsscheibe 12a auf, welche um die Rotationsachse 10 rotationsfähig ist und drehfest mit dem Hohlrad 3d verbunden ist aber relativ zu diesem und zu einer Reibfläche 12b verschiebbar an dem Hohlrad 3d sitzt. Die Reibfläche 12c ist an dem Gehäuseabschnitt 6b fest. Eine Druckplatte 12c ist um die Rotationsachse 10 drehfest aber längs verschiebbar mit dem Hohlrad 3d verbunden und liegt der Bremsscheibe 12a axial gegenüber. Zwischen der Druckplatte 12c und dem Hohlrad 3d ist eine Druckfeder 12d eingespannt.

### 1.10 Betätigungsblock 27 -Figuren 1 und 1 d

In Figur 1d ist der Betätigungsblock 27 in einem Ausschnitt aus Figur 1 vergrößert dargestellt. Der Betätigungsblock 27 ist durch eine Betätigungseinrichtung 23 für die Kupplung 13 und durch eine Betätigungseinrichtung 25 für die Bremse 12 gebildet. Beide Betätigungseinrichtungen 23 und 25 sind anteilig außerhalb des Inneren der Gehäuseteile 6a, 6b bzw. 6c und anteilig in der Zwischenwand 6d axial zwischen der elektrischen Maschine 2 und dem Zweigang-Planetengetriebe 20 angeordnet.

Die Betätigungseinrichtung 23 weist eine Gebereinrichtung 23g und wenigstens einen Kanal 23d, eine Druckkammer 23e eines Nehmerzylinders und einen Kolben 23f auf. Die Gebereinrichtung ist aus einem elektromotorischen Aktor 23a und aus einem Geberzylinder 23b mit Druckkolben 23c gebildet. Der Aktor 23a ist mit dem Druckkolben 23c verbunden, welcher längs beweglich in dem Geberzylinder 23b sitzt. Der Kanal 23d ist für ein Druckmedium wie z.B. für eine hydraulische Flüssigkeit durchlässig, ist zumindest teilweise in der Zwischenwand 6d ausgebildet und verbindet den Geberzylinder 23b der Gebereinrichtung 23g mit der Druckkammer 23e. Die Druckkammer 23e ist in der Zwischenwand 6d entweder direkt ausgebildet oder der Nehmerzylinder ist mit der Druckkammer 23e in der Zwischenwand 6d aufgenommen. Ein Teil der Druckkammer 23e ist radial zwischen dem Stator 8 und der Antriebswelle 9 so angeordnet, dass diese dem Stator 8 radial gegenüberliegt. Geberzylinder 23b, Kanal 23d und Druckkammer 23e sind mit dem Druckmedium befüllt.

Die Antriebsvorrichtung 1 ist mit einer Betätigungseinrichtung 25 für die Bremse 12 versehen. Die Betätigungseinrichtung 25 weist eine Gebereinrichtung 25g, welche mit einen elektromotorischen Aktor 25a, einen Geberzylinder 25b mit Druckkolben 25c versehen ist, auf. Weiterhin besteht die Betätigungseinrichtung aus wenigstens einem Kanal 25d, einer Druckkammer 25e eines Nehmerzylinders und aus einem Kolben 25f. Der Aktor 25a ist mit dem Druckkolben 25c verbunden, welcher längs beweglich in dem Geberzylinder 25b sitzt. Der Kanal 25d ist für ein Druckmedium wie für eine hydraulische Flüssigkeit durchlässig, ist zumindest teilweise in der Zwischenwand 6d ausgebildet und verbindet die Gebereinrichtung 25g mit der Druckkammer 25e. Geberzylinder 25b, Kanal 25d und Druckkammer 25e sind mit dem Druckmedium befüllt.

### 1.11 Ausrücklager 24 und 26 -Figuren 1 und 1e

Zwischen dem Kolben 23f der Betätigungseinrichtung 23 und der Druckplatte 13b bzw. einem auf die Druckplatte 13b wirkenden Hebel der Kupplung 13 ist ein Ausrücklager 24 konzentrisch zur Rotationsachse 10 angeordnet, das ein Gleitlager alternativ ein Axialwälzlager oder ein Schrägwälzlager sein kann. Zwischen dem Kolben 25f der Betätigungseinrichtung 25 und der Druckplatte 12c der Bremse 12 ist ein Ausrücklager 26 konzentrisch zur Rotationsachse 10 angeordnet, das auch ein Gleitlager alternativ ein Axialwälzlager oder ein Schrägwälzlager sein kann.

### 1.12 Wirkzusammenhang zwischen dem Schaltblock und dem ersten Planetentrieb sowie zwischen Bremse und Kupplung - Figuren 1, 1a bis 1e

Mit dem Schaltblock 28 können ein erster Gang, ein zweiter Gang und eine Neutralstellung geschaltet werden. Dazu sind Wirkverbindungen zwischen der zweiten Anschlusswelle 16 und einer dritten Anschlusswelle 29 des Planetentriebs 3 sowie der ortsfesten Umgebungskonstruktion, beispielsweise dem Gehäuse 6b herstellbar. Die zweite Anschlusswelle 16 ist, wie schon im Kapitel 1.3 beschrieben, der Planetenträger 3b des ersten Planetentriebs. Die dritte Anschlusswelle 29 ist das Hohlrad 3d des Planetentriebs.

Durch Einlegen der Bremse 12 kann das Hohlrad 3d gegenüber der Umgebungskonstruktion festgelegt werden. Dazu verschiebt der Aktor 25a den Druckkolben 25c im Geberzylinder 25b und hydraulische Flüssigkeit aus dem Geberzylinder 25b über den Kanal 25d in die Druckkammer 25e. Die hydraulische Flüssigkeit in der Druckkammer 25e verschiebt den Kolben 25f gegen die Druckplatte 12c oder gegen einen auf die Druckplatte 12c wirkenden Hebel. Dadurch wird die Druckplatte 12c gegen den Widerstand der Druckfeder 12d axial gegen die Bremsscheibe 12a bewegt und die Bremse 12 zugespannt, wobei die Bremsscheibe 12a bei voller Wirkung der Bremse 12 zwischen der Druckplatte 12c und der Reibfläche 12b axial eingeklemmt ist. Das Hohlrad 3d ist somit gegenüber dem Gehäuseabschnitt 6b rotationsfest gelegt.

Das Hohlrad 3d und der Planetenträger 3b sind im ausgerückten Betriebszustand der Kupplung 13 zueinander um die Rotationsachse 10 relativbeweglich. Im ausgerückten Betriebszustand rotiert die Kupplungsscheibe (Kupplungselement 13a) zusammen mit dem Planetenträger 3b frei gegenüber der Druckplatte 13b und gegenüber dem Hohlrad 3d um die Rotationsachse 10.

Wenn die Kupplung 13 ausgerückt und die Bremse 12 eingelegt ist, werden von der Antriebswelle 9' über die erste Anschlusswelle 15 in den ersten Planetentrieb 3 eingebracht, der damit seine Wirkung entfaltet und Drehmomente zur zweiten Anschlusswelle 16 hin wandelt, weil sich die rotierenden Planetenräder 3c an dem rotationsfesten Hohlrad 3d abstützen können. Die Wirkung des Zweigang-Planetengetriebes ist durch die Wirkungen des ersten Planetensatzes 3 und des zweiten Planetensatzes 4 bestimmt.

Die Kupplung 13 wird eingerückt, in dem der Aktor 23a den Druckkolben 23c in dem Geberzylinder 23b bewegt und hydraulische Flüssigkeit aus dem Geberzylinder 23 verdrängt. Die hydraulische Flüssigkeit weicht über den Kanal 23d in die Druckkammer 23e aus und bewegt den Kolben 23f gegen die Druckplatte 13b, wodurch die Druckplatte 13b gegen den Widerstand der Druckfeder 13c axial gegen das Kupplungselement 13a gepresst wird. Das Kupplungselement 13a wird dadurch beispielsweise axial gegen eine Reibfläche an dem Hohlrad 3d gepresst und ein Reibschluss zwischen dem Kupplungselement 13a und dem Hohlrad 3d solange hergestellt, bis Planetenträger 3b und Hohlrad 3d über das Kupplungselement 13a reibschlüssig rotationsfest miteinander gekuppelt sind.

Ist die Bremse 12 eingelegt und die Kupplung 13 eingerückt, ist die Übertragung von Drehmomenten von der Antriebswelle 9' über die erste Anschlusswelle 15 an die zweite Anschlusswelle 16 blockiert, da das Hohlrad 3d an dem Gehäuseabschnitt 6b und gegenüber dem Planetenträger 3b unbeweglich gehalten ist.

Die Bremse 12 löst, indem der Druck am Kolben 12f aufgehoben ist und die Druckplatte 12c mit Unterstützung der Wirkung der Druckfeder 12d von der Bremsscheibe 12a abhebt und diese schließlich freigibt. Das Hohlrad 3d ist relativ zu dem Gehäuseabschnitt 6b um die Rotationsachse 10 rotationsfähig.

Wenn die Bremse 12 gelöst ist und die Kupplung 13 eingelegt ist, werden von der Antriebswelle 9' über die erste Anschlusswelle 15 in den ersten Planetentrieb 3 eingebrachte Drehmomente unverändert direkt an die Anschlusswelle 16 und an die Anschlusswelle 17 weitergegeben, da über die Kupplung 13 zwischen der ersten Anschlusswelle 15 und der dritten Anschlusswelle 29 eine drehmomentfeste Wirkverbindung ausgebildet ist. Der erste Planetentrieb 3 ist damit blockiert und seine Wirkung somit aufgehoben, weil keine Relativbewegung zwischen dem Planetenträger 3b und dem Hohlrad 3d möglich ist. Die Wirkung des Zweigang-Planetengetriebes 20 ist somit nur durch die Wirkung des zweiten Planetentriebs 4 bestimmt.

Die Kupplung 13 rückt aus, in dem der Druck am Kolben 23f aufgehoben ist und die Druckplatte 13b mit Unterstützung der Wirkung der Druckfeder 13c von der dem Kupplungselement 13a abhebt und dieses schließlich freigibt. Das Hohlrad 3d ist relativ zum Planetenträger 3b um die Rotationsachse 10 rotationsfähig.

Wenn die Bremse 12 gelöst ist und die Kupplung 13 ausgerückt ist, läuft der erste Planetentrieb 3 leer, da sich die rotierenden Planetenräder 13c nicht an dem Hohlrad 3d abstützen können, weil dieses dann mitrotiert. Es können keine Drehmomente von der Antriebswelle 9' auf die zweite Anschlusswelle 16 weitergegeben werden.

### 2. Figur 2 und Figuren 2a sowie 2b,

### 2.1 Allgemeiner Aufbau der Antriebsvorrichtung

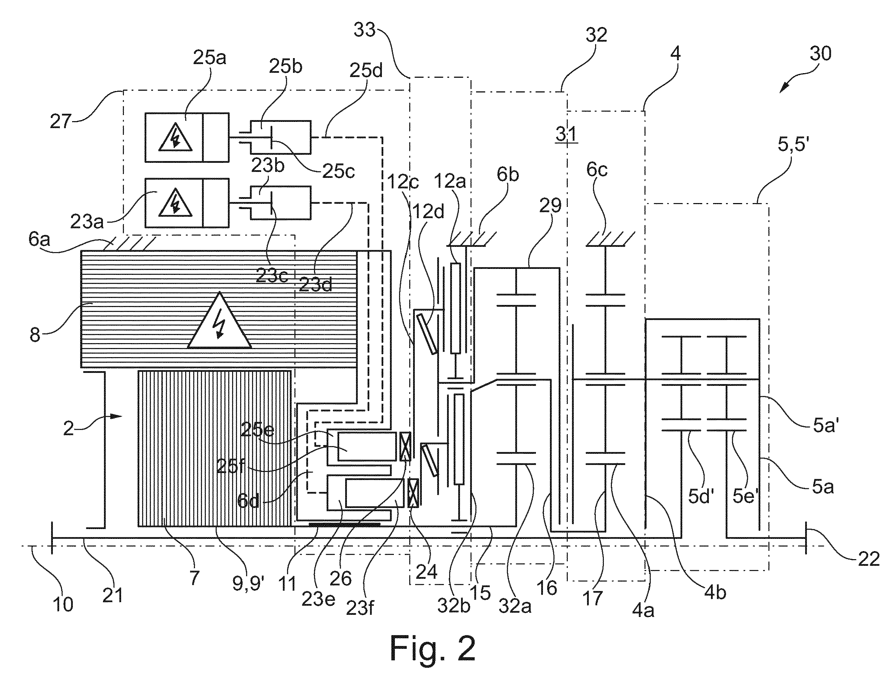

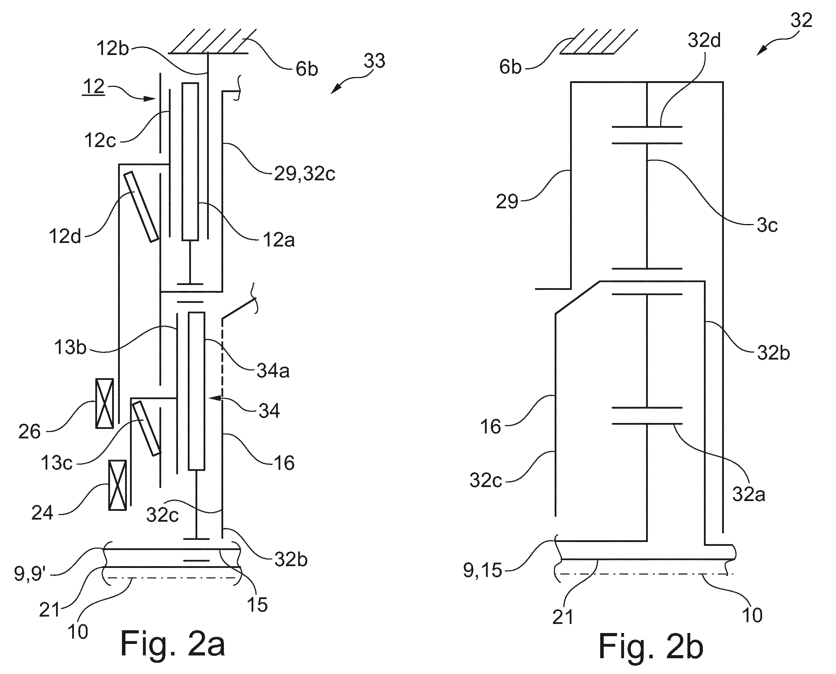

Figur 2 zeig schematisch einen Längsschnitt durch ein Ausführungsbeispiel einer Antriebsvorrichtung 30. Die Antriebsvorrichtung 1 weist eine elektrische Maschine 2, einen Betätigungsblock 27, einen Schaltblock 33, ein Zweigang-Planetengetriebe 31, und ein Differenzial 5 auf. Die elektrische Maschine 2, das Zweigang-Planetengetriebe 20 und das Differenzial 5 sind koaxial zueinander angeordnet und weisen als gemeinsame Hauptachse die Rotationsachse 10 bzw. eine axiale Verlängerung dieser, der Rotorwelle 9 und damit der Antriebswelle 9' auf.

### 2.2 Elektrische Maschine 2 und Gehäuse 6

Der Aufbau der elektrische Maschine 2 und des Gehäuses 6 entspricht dem in der Antriebsvorrichtung 1 nach Figur 1 und ist im Kapitel 1.2 beschrieben.

### 2.3 Zweigang-Planetengetriebe 31 - Figuren 2 und 2b

Das Zweigang-Planetengetriebe 31 weist einen ersten Planetentrieb 32 und einen zweiten Planetentrieb 4 auf. Der Aufbau entspricht im Wesentlichen dem Aufbau des Zweigang-Planetengetriebes 20 der Antriebsvorrichtung 1 nach Figur 1.

Die Rotorwelle 9 ist Antriebswelle 9 der elektrischen Maschine und ist mit dem ersten Planetentrieb 32 über die erste Anschlusswelle 15 wirkverbunden. Die erste Anschlusswelle 15 des ersten Planetentriebs 32 ist eine um die Rotationsachse 10 rotationsfähiges Sonnenrad 32a, welche entweder einteilig mit der Antriebswelle 9 ausgebildet oder als separates Bauteil ausgebildet und mit dieser zumindest um die Rotationsachse 10 drehbar relativ zu dieser rotationsfest verbunden ist. Der erste Planetentrieb 32 ist mit dem zweiten Planetentrieb 4 über die zweite Anschlusswelle 16 und eine Anschlusswelle 17 wirkverbunden. Die zweite Anschlusswelle 16 ist der um die Rotationsachse 10 rotationsfähige Planetenträger 32b des ersten Planetentriebs 3. Die Anschlusswelle 17 ist eine um die Rotationsachse 10 rotationsfähiges Sonnenrad 4a des zweiten Planetentriebs 4. Die zweite Anschlusswelle 16 und die Anschlusswelle 17 sind entweder einteilig miteinander ausgebildet oder als jeweils separat ausgebildete Bauteile zumindest rotationsfest miteinander verbunden.

Die Wirkverbindungen zwischen dem zweiten Planetentrieb 4 und dem Planetendifferenzial 5' sowie dem Planetendifferenzial 5' und den Abtriebswellen 21 und 22 wird im Kapitel 1.3 beschrieben.

### 2.4 Erster Planetentrieb 32 - Figuren 2 und 2b

In Figur 2b ist der erste Planetentrieb 32 in einem Ausschnitt aus Figur 2 vergrößert dargestellt. Der erste Planetentrieb 32 ist aus dem Sonnenrad 32a, aus dem Planetenträger 32b, aus einem Satz Planeten 3c, von denen nur ein Planet dargestellt ist, und aus einem Hohlrad 32d gebildet. Der Planetenträger 32b und das Hohlrad 32d sind um die Rotationsachse 10 rotationsfähig zum Gehäuseabschnitt 6b in der Antriebsvorrichtung 1 gelagert. An dem Planetenträger 32b ist Stirnseitig eine Reibfläche 32c ausgebildet. Die Planeten 3c sind auf Planetenbolzen drehbar an dem Planetenträger 3b gelagert und stehen im Zahneingriff mit dem Sonnenrad 3a und dem Hohlrad 3d. Der Planetenträger 32b ist die zweite Anschlusswelle 16 und das Hohlrad 32d ist die dritte Anschlusswelle.

### 2.5 Zweiter Planetentrieb - Figuren 2 und 1 b

Der Aufbau des zweiten Planetentriebs 4 des Zweigang-Planetengetriebes 31 entspricht dem des Zweigang-Planetengetriebes 20 nach Figur 1 und ist im Kapitel 1.5 beschrieben.

### 2.6 Planetendifferenzial 5' - Figuren 2 und 1c

Der Aufbau des Planetendifferenzials 5' der Antriebsvorrichtung 30 entspricht dem der Antriebsvorrichtung 1 und ist im Kapitel 1.6 beschrieben.

### 2.7. Schaltblock 33 -Figuren 2 und 2a

In Figur 2a ist der Schaltblock 33 in einem Ausschnitt aus Figur 2 vergrößert dargestellt. Der Schaltblock 33 ist durch eine Bremse 12 und eine Kupplung 34 gebildet. Bremse 12 und Kupplung 34 sind konzentrisch ineinander auf der Rotationsachse 10 angeordnet, wobei die Bremse 12 radial außen angeordnet ist.

### 2.8.1 Kupplung 34 - Figuren 2 und 2a

Die Kupplung 34 weist ein erstes Kupplungselement 34a auf, das um die Rotationsachse 10 rotationsfähig ist und rotationsfest mit der Rotorwelle 9 bzw. Antriebswelle 9' alternativ mit dem Sonnenrad 32b verbunden ist aber längs entlang der Rotationsachse 10 relativ zu dem Planetenträger 32b und zur Rotorwelle 9 beweglich ist. Weiterhin ist die Kupplung 34 mit einer Druckplatte 13b verbunden, welche um die Rotationsachse 10 drehfest mit dem Hohlrad 32d verbunden aber längs entlang der Rotationsachse 10 relativ zu dem Planetenträger 32b und zum Hohlrad 32d verschiebbar angeordnet ist. Das Kupplungselement 34a ist beispielsweise eine Kupplungsscheibe mit Reibbelägen. Dem Kupplungselement 34a liegt axial die Reibfläche 32c an dem Planetenträger 32b gegenüber. Zwischen der Druckplatte 13b und dem Hohlrad 32d ist eine Druckfeder 13c eingespannt.

### 2. 9 Bremse 12 -Figur 2 und 2a

Der Aufbau der Bremse 12 des Schaltblocks 33 der Antriebsvorrichtung 30 entspricht dem des Schaltblocks 28 der Antriebsvorrichtung 1 und ist nach Figur 1e im Kapitel 1.9 beschrieben.

### 2.10 Betätigungsblock 27 - Figuren 2 und 1d

Der Aufbau des Betätigungsblocks 27 der Antriebsvorrichtung 33 entspricht dem der Antriebsvorrichtung 1 und ist nach Figur 1d im Kapitel 1.10 beschrieben.

### 2.11 Ausrücklager 24 und 26 -Figuren 1 und 1e

Aufbau und Anordnung der Ausrücklager 24 und 26 sind im Kapitel 1.11 beschrieben.

### 2.12 Wirkzusammenhang zwischen dem Schaltblock und dem ersten Planetentrieb sowie zwischen Bremse und Kupplung - Figuren 2 bis 2b und Figur 1d

Mit dem Schaltblock 33 können ein erster Gang, ein zweiter Gang und eine Neutralstellung geschaltet werden. Dazu sind Wirkverbindungen zwischen der ersten Anschlusswelle 15 sowie der zweiten Anschlusswelle 16 und einer dritten Anschlusswelle 29 des Planetentriebs 32 sowie der ortsfesten Umgebungskonstruktion, beispielsweise dem Gehäuse 6b herstellbar. Die erste Anschlusswelle 15 ist die Antriebswelle 9' bzw. das Sonnenrad 32a und zweite Anschlusswelle 16 ist, wie schon im Kapitel 1.3 beschrieben, der Planetenträger 32b des ersten Planetentriebs 32. Die dritte Anschlusswelle 29 ist das Hohlrad 32d des Planetentriebs 32.

Durch Einlegen der Bremse 12 kann das Hohlrad 32d gegenüber der Umgebungskonstruktion festgelegt werden. Dazu verschiebt der Aktor 25a den Druckkolben 25c im Geberzylinder 25b und hydraulische Flüssigkeit aus dem Geberzylinder 25b über den Kanal 25d in die Druckkammer 25e. Die hydraulische Flüssigkeit in der Druckkammer 25e verschiebt den Kolben 25f gegen die Druckplatte 12c oder gegen einen auf die Druckplatte 12c wirkenden Hebel. Dadurch wird die Druckplatte 12c gegen den Widerstand der Druckfeder 12d axial gegen die Bremsscheibe 12a bewegt und die Bremse 12 zugespannt, wobei die Bremsscheibe 12a bei voller Wirkung der Bremse 12 zwischen der Druckplatte 12c und der Reibfläche 12b axial eingeklemmt ist. Das Hohlrad 32d ist somit gegenüber dem Gehäuseabschnitt 6b rotationsfest gelegt.

Der Planetenträger 32b und das Sonnenrad 32a sind im ausgerückten Betriebszustand der Kupplung 34 zueinander um die Rotationsachse 10 relativbeweglich. Im ausgerückten Betriebszustand rotiert die Kupplungsscheibe (Kupplungselement 34a) zusammen mit dem Sonnenrad 32a frei gegenüber der Druckplatte 13b und gegenüber dem Planetenträger 32b.

Wenn die Kupplung 34 ausgerückt und die Bremse 12 eingelegt ist, werden von der Antriebswelle 9' über die erste Anschlusswelle 15 in den ersten Planetentrieb 34 eingebracht, der damit seine Wirkung entfaltet und Drehmomente zur zweiten Welle 16 hin wandelt, weil sich die rotierenden Planetenräder 3c an dem rotationsfesten Hohlrad 32d abstützen können. Die Wirkung des Zweigang-Planetengetriebes 31 ist durch die Wirkungen des ersten Planetensatzes 32 und des zweiten Planetensatzes 4 bestimmt.

Die Kupplung 34 wird eingerückt, in dem der Aktor 23a den Druckkolben 23c in dem Geberzylinder 23b bewegt und hydraulische Flüssigkeit aus dem Geberzylinder 23 verdrängt. Die hydraulische Flüssigkeit weicht über den Kanal 23d in die Druckkammer 23e aus und bewegt den Kolben 23f gegen die Druckplatte 13b, wodurch die Druckplatte 13b gegen den Widerstand der Druckfeder 13c axial gegen das Kupplungselement 34a gepresst wird. Das Kupplungselement 34a wird dadurch gegen die Reibfläche 32c an dem Planetenträger 32b gepresst und ein Reibschluss zwischen dem Kupplungselement 34a und dem Planetenträger 32b solange hergestellt, bis Planetenträger 32b und Sonnenrad 32a über das Kupplungselement 34a reibschlüssig rotationsfest miteinander gekuppelt sind.

Ist die Bremse 12 eingelegt und die Kupplung 34 eingerückt, ist die Übertragung von Drehmomenten von der Antriebswelle 9' über die erste Anschlusswelle 15 an die zweite Anschlusswelle 16 blockiert, da das Hohlrad 32d an dem Gehäuseabschnitt 6b und der Planetenträger 32b und das Sonnenrad 32a rotationsunbeweglich aneinander gehalten sind.

Die Bremse 12 löst, indem der Druck am Kolben 12f aufgehoben ist und die Druckplatte 12c mit Unterstützung der Wirkung der Druckfeder 12d von der Bremsscheibe 12a abhebt und diese schließlich freigibt. Das Hohlrad 32d ist relativ zu dem Gehäuseabschnitt 6b um die Rotationsachse 10 rotationsfähig.

Wenn die Bremse 12 gelöst ist und die Kupplung 34 eingelegt ist, werden von der Antriebswelle 9' über die erste Anschlusswelle 15 in den ersten Planetentrieb 34 eingebrachte Drehmomente unverändert direkt an die zweite Anschlusswelle 16 und Anschlusswelle 17 weitergegeben, da eine mittels der Kupplung 34 drehmomentfeste Wirkverbindung zwischen der ersten Anschlusswelle 15 und der zweiten Anschlusswelle 16 ausgebildet ist. Sonnenrad 32a und Planeten 3c können nicht gegeneinander rotieren. Der erste Planetentrieb 34 ist blockiert und seine Wirkung somit aufgehoben. Die Wirkung des Zweigang-Planetengetriebes 31 ist somit nur durch die Wirkung des zweiten Planetentriebs 4 bestimmt.

Die Kupplung 34 rückt aus, in dem der Druck am Kolben 23f aufgehoben ist und die Druckplatte 13b mit Unterstützung der Wirkung der Druckfeder 13c von der dem Kupplungselement 34a abhebt und dieses schließlich freigibt. Sonnenrad 32a und Planetenträger 3b sind relativ zueinander um die Rotationsachse 10 rotationsfähig.

Wenn die Bremse 12 gelöst ist und die Kupplung 34 ausgerückt ist, läuft der erste Planetentrieb 34 leer, da sich die rotierenden Planetenräder 13c nicht an dem Hohlrad 32d abstützen können, weil dieses dann mitrotiert. Es können keine Drehmomente von der Antriebswelle 9' auf die zweite Welle 16 weitergegeben werden.

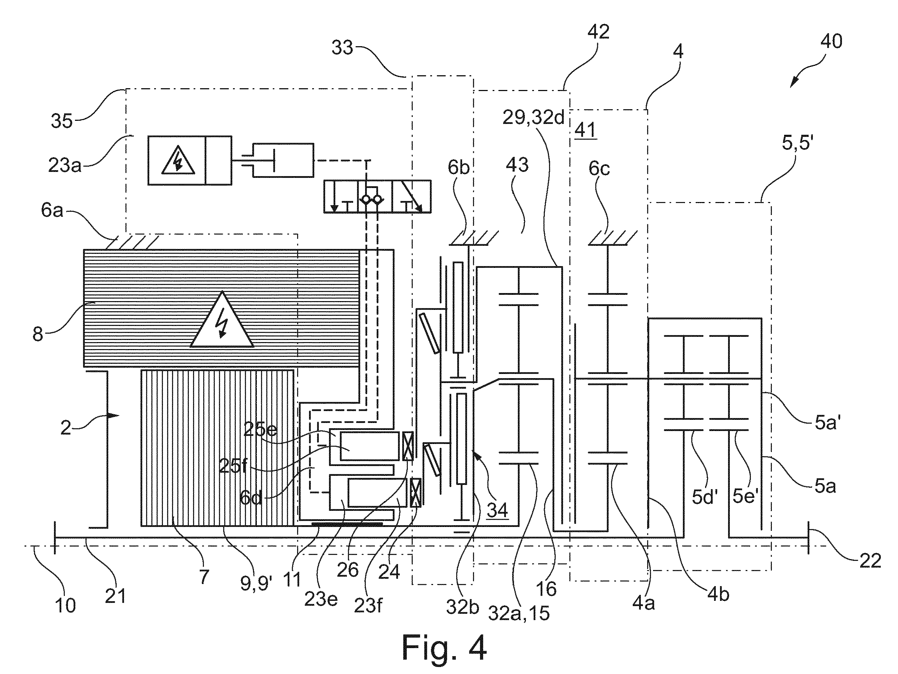

### 3. Antriebsvorrichtung 40, Figuren 4, 2a - 2b und Figur 3

Figur 4 zeigt eine Antriebsvorrichtung 40, in der alternativ zu der im Kapitel 2 beschriebenen Antriebsvorrichtung 30 in einem Zweigang-Planetentrieb 41 der erste Planetentrieb 42 eine Freilaufkupplung 43 aufweist. Die Freilaufkupplung 43 sitzt zwischen dem Hohlrad 32d und dem Gehäuseabschnitt 6b. Die Freilaufkupplung 43 verringert beim Wechsel der Gänge, in dem die Freilaufkupplung 43 nach dem Lösen der Bremse 12 das Hohlrad 32d vorübergehend weiterhin sperrt und erst bei Einsetzen der Wirkung der einrückenden Kupplung 34 freigibt. Außerdem weist die Antriebsvorrichtung 40 einen Betätigungsblock 35 auf.

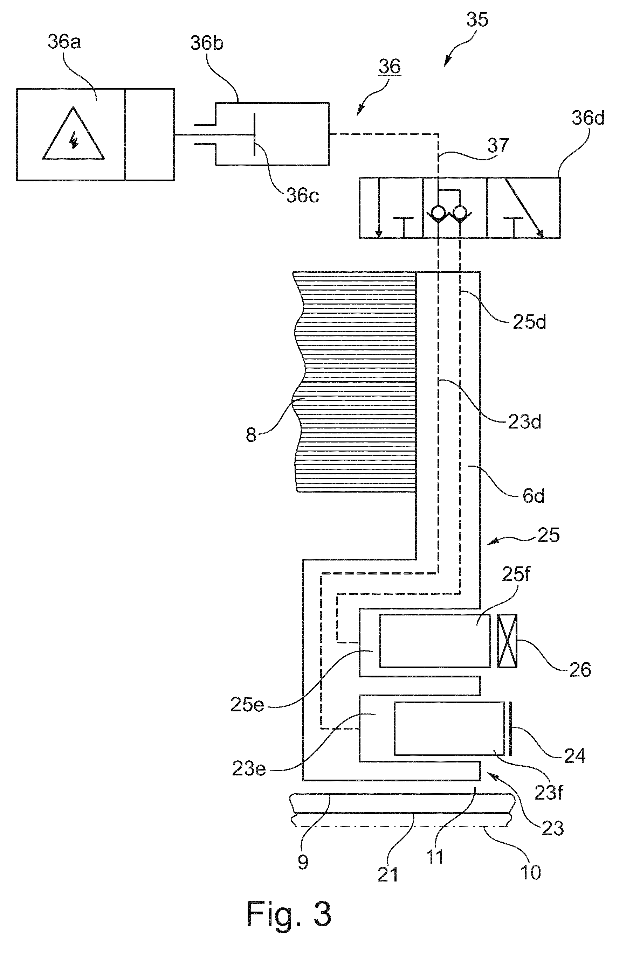

### 3. Betätigungsblock 35 -Figuren 3 und 4

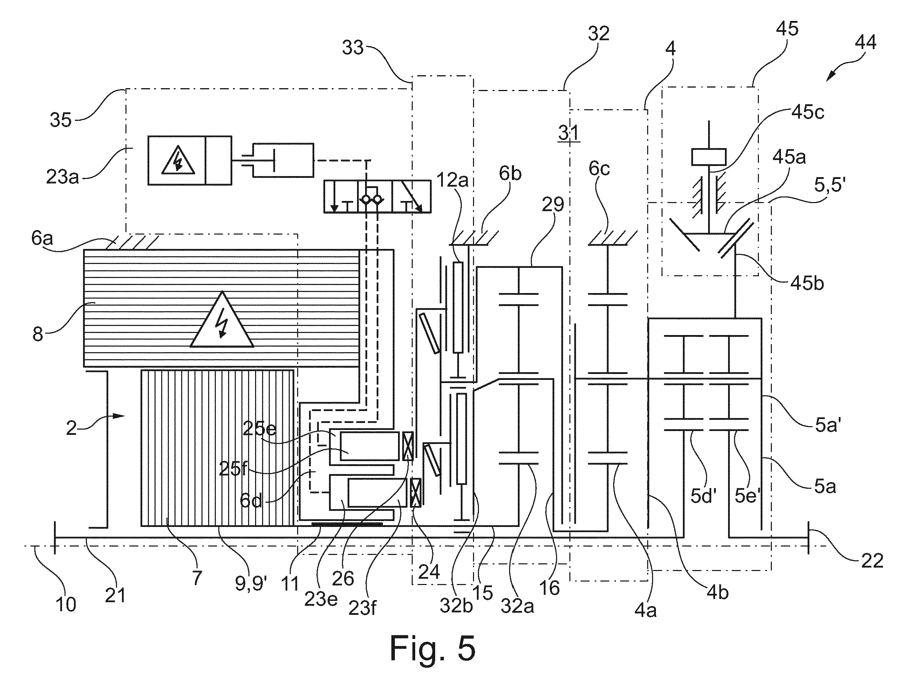

In Figur 3 ist ein Betätigungsblock 35 in einem Ausschnitt der Figuren 4 oder 5 vergrößert dargestellt. Der Betätigungsblock 35 ist eine Alternative zu dem Betätigungsblock 27 nach Figur 1. Die Betätigungseinrichtungen 23 und 25 weisen eine gemeinsame Ansteuerung 36 auf, die durch einen elektromotorischen Aktor 36a, einen Geberzylinder 36b mit einem Druckkolben 36c und durch ein Mehrwegeventil 36d gebildet ist. Der Geberzylinder 36b ist über mindestens einen Kanal 37 mit dem Mehrwegeventil 36d verbunden. Von dem Mehrwegeventil 36d führen die Kanäle 23d bzw. 25d zu den Druckkammern 23e bzw. 25e. Über das Mehrwegeventil 36d ist es möglich, den Geberzylinder 36b und den Kanal 37 entweder mit dem Kanal 23d und damit der Druckkammer 23e oder mit dem Kanal 25d und damit mit der Druckkammer 25e zu verbinden. Eine Ansteuerung beider Druckkammern 23e und 25e zugleich kann mit dem Mehrwegeventil 36d entweder ausgeschlossen oder als weitere Schaltoption vorgesehen sein.

### 4. Antriebsvorrichtung 44, Figuren 5, 2a - 2b und Figur 3

Figur 5 zeigt eine Antriebsvorrichtung 44, die im Wesentlichen wie die Antriebsvorrichtung 30 aufgebaut und mit Ausnahme des Kapitels 2.10 im Kapitel 2 beschrieben ist. Die Antriebsvorrichtung ist zusätzlich über einen Winkeltrieb 45 mit einem von der elektrischen Maschine unabhängigen zweiten Antrieb verbunden.

Der Winkeltrieb 45 weist eine Ritzelwelle 45c mit einem Ritzel 45a auf, die mit einem Tellerrad 45b im Zahneingriff steht. Das Tellerrad 45b ist an dem Planetenträger 5a befestigt. Der Planetenträger 5a kann über den Winkeltrieb um die Rotationsachse 10 rotierend angetrieben werden.

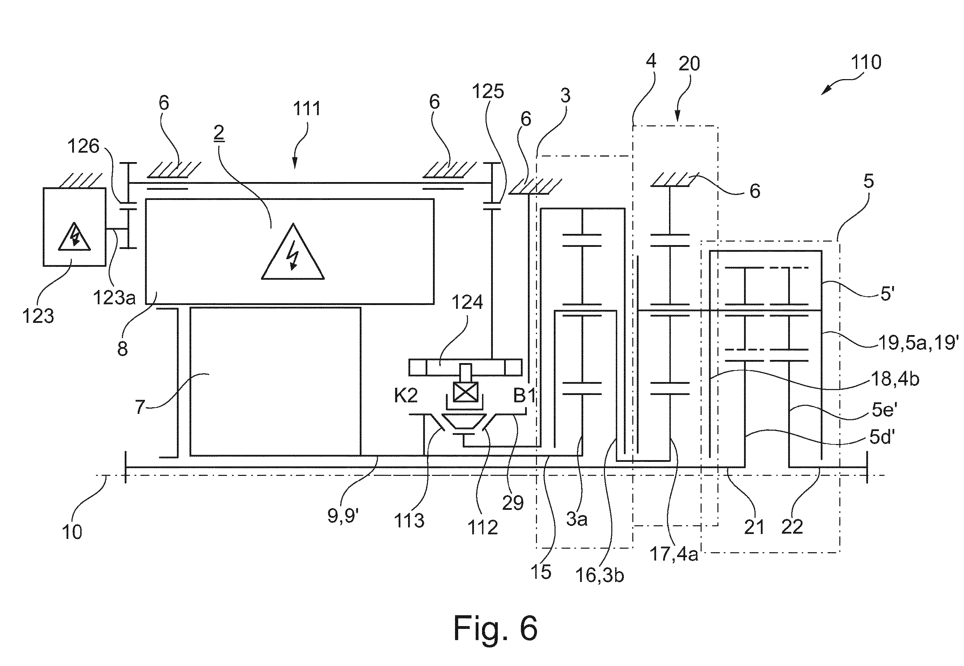

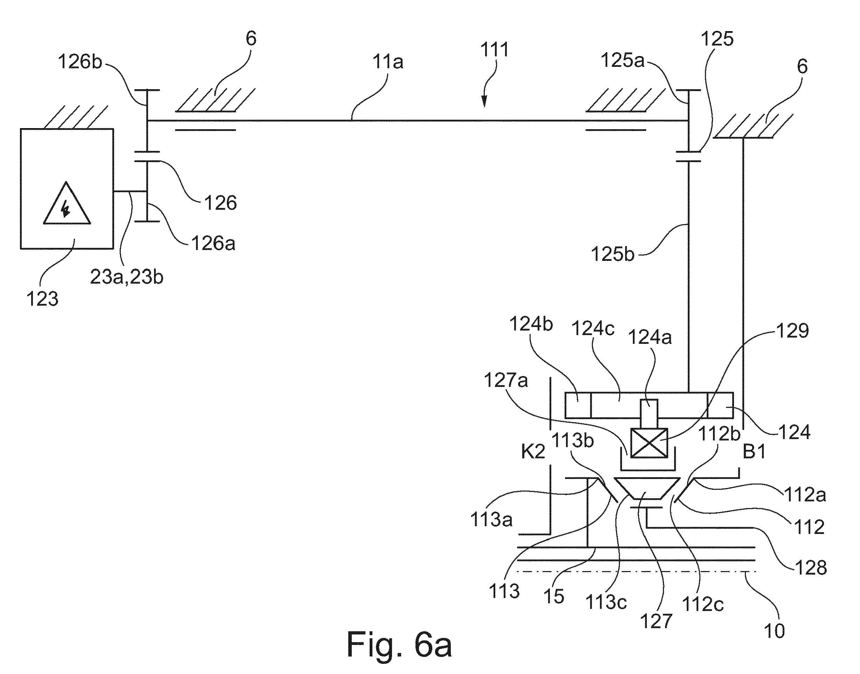

### 5. Antriebsvorrichtung 110, Figuren 6, 1 a -1 c, Figur 6a

Figur 6 zeig schematisch einen Längsschnitt durch ein Ausführungsbeispiel einer Antriebsvorrichtung 110. Die Antriebsvorrichtung 110 weist eine elektrische Maschine 2, eine Kupplung 113 (K1), eine Bremse 112 (B1) eine Ein- und Ausrückvorrichtung 111, ein Schaltgetriebe in Form eines Zweigang-Planetengetriebes 20 und ein Differenzial 5 auf. Die Ein- und Ausrückvorrichtung 111 ist aus einem Stellantrieb 123, einer getrieblichen Verbindung 125, einer getrieblichen Verbindung 126 und aus einem Stellwandler 124 gebildet.

Die elektrische Maschine 2, die Kupplung 113 und die Bremse 112, das Zweigang-Planetengetriebe 20 und das Differenzial 5 sind koaxial zueinander angeordnet und weisen als gemeinsame Hauptachse die Rotationsachse 10, bzw. eine axiale Verlängerung dieser, der Rotorwelle 9 und damit der Antriebswelle 9' auf. Die Achse 123a des Stellantriebes, die eine Rotationsachse oder eine Schwenkachse sein kann, ist mit Abstand achsparallel zu der Rotationsachse 10 angeordnet.

Die elektrische Maschine 2 ist in einem Gehäuseabschnitt eines in Figur 1 nicht vollständig dargestellten und aus Gehäuseabschnitten zusammengesetzten Gehäuses 6 der Antriebsvorrichtung 1 aufgenommen und weist einen Rotor 7, einen Stator 8 und die Rotorwelle 9 auf. Der Stator 8 sitzt zumindest rotationsfest in dem Gehäuse 6. Der Rotor 7 sitzt konzentrisch zumindest rotationsfest auf der Rotorwelle 9. Die Rotorwelle 9 ist mit dem Rotor 7 um die Rotationsachse 10 relativ zu dem Stator 8 drehbar

Das Zweigang-Planetengetriebe 20 weist einen ersten Planetentrieb 3 und einen zweiten Planetentrieb 4 auf.

Die Rotorwelle 9 ist Antriebswelle 9 der elektrischen Maschine ist mit dem ersten Planetentrieb 3 über eine erste Anschlusswelle 15 wirkverbunden. Die erste Anschlusswelle 15 des ersten Planetentriebs 3 ist ein um die Rotationsachse 10 rotationsfähiges Sonnenrad 3a, welches entweder einteilig mit der Antriebswelle 9 ausgebildet oder als separates Bauteil ausgebildet und mit dieser zumindest um die Rotationsachse 10 drehbar relativ zu dieser drehmomentfest verbunden ist.

Der erste Planetentrieb 3 ist mit dem zweiten Planetentrieb 4 über die zweite Anschlusswelle 16 und eine Anschlusswelle 17 wirkverbunden. Die zweite Anschlusswelle 16 ist der um die Rotationsachse 10 rotationsfähige Planetenträger 3b des ersten Planetentriebs 3. Die Anschlusswelle 17 ist ein um die Rotationsachse 10 rotationsfähiges Sonnenrad 4a des zweiten Planetentriebs 4. Die zweite Anschlusswelle 16 und die Anschlusswelle 17 sind entweder einteilig miteinander ausgebildet oder als jeweils separat ausgebildete Bauteile zumindest drehmomentfest miteinander verbunden.

Das Zweigang-Planetengetriebe 20 ist mit dem Differenzial 5 über eine Anschlusswelle 18 und eine Anschlusswelle 19 wirkverbunden. Die Anschlusswelle 18 ist ein um die Rotationsachse 10 rotationsfähiger Planetenträger 4b des zweiten Planetentriebs 4. Die Anschlusswelle 19 ist ein Differenzialkorb 5a des Differenzials 5 und ist damit die Summenwelle 19' des Differenzials 5. Da das Differenzial 5 ein Planetendifferenzial 5' ist, ist der Differenzialkorb 5a der Planetenträger 5a' des Planetendifferenzials 5'.

Das Planetendifferenzial 5' ist über ein Sonnenrad 5d' mit einer Abtriebswelle 21 und über ein Sonnenrad 5e' mit einer Abtriebswelle 22 wirkverbunden. Die unabhängig voneinander um die Rotationsachse rotationsfähigen Abtriebswellen 21 und 22 führen jeweils zu nicht dargestellten angetriebenen Rädern oder jeweils zu einer angetriebenen Welle eines Fahrzeugs.

In Figur 1 a ist der erste Planetentrieb 3 in einem Ausschnitt aus Figur 1 oder 6 vergrößert dargestellt. Der erste Planetentrieb 3 ist aus dem Sonnenrad 3a, aus dem Planetenträger 3b, aus einem Satz Planetenrädern 3c, von denen nur ein Planetenrad 3c dargestellt ist, und aus einem Hohlrad 3d gebildet. Der Planetenträger 3b und das Hohlrad 3d sind um die Rotationsachse 10 rotationsfähig in der Antriebsvorrichtung 1 gelagert. Die Planetenräder 3c sind auf Planetenbolzen drehbar an dem Planetenträger 3b gelagert und stehen im Zahneingriff mit dem Sonnenrad 3a und dem Hohlrad 3d.

In Figur 1b ist der zweite Planetentrieb 4 in einem Ausschnitt aus Figur 1 oder vergrößert dargestellt. Der zweite Planetentrieb 4 ist aus dem Sonnenrad 4a, dem Planetenträger 4b, aus einem Satz Planetenrädern 4c, von denen nur ein Planetenrad dargestellt ist, und aus einem Hohlrad 4d gebildet. Die Planetenräder 4c sind auf Planetenbolzen drehbar an dem Planetenträger 4b gelagert und stehen im Zahneingriff mit dem Sonnenrad 4a und dem Hohlrad 4d. Der Planetenträger 4b ist um die Rotationsachse 10 rotationsfähig in der Antriebsvorrichtung gelagert. Das Hohlrad 4d ist an dem Gehäuse 6 ortsfest gehalten.

In Figur 1c ist das Planetendifferenzial 5' in einem Ausschnitt aus Figur 1 oder 6 vergrößert dargestellt. Das Planetendifferenzial 5' ist aus dem Planetenträger 5a, aus zwei Sätzen Ausgleichsrädern 5b und 5c in Form von Planeten 5b' bzw. 5c' und aus den Abtriebsrädern 5d und 5e in Form der Sonnenräder 5d' und 5e' gebildet. Die Planetenräder 5b' des einen Planetensatzes stehen im Zahneingriff mit dem Sonnenrad 5d' und die Planeten 5c' mit dem Sonnenrad 5e'. Außerdem steht jeweils ein Planetenrad 5b' des einen Satzes mit einem Planetenrad 5c' des anderen Planetensatzes im Zahneingriff. Beide Sätze Planeten 5b' und 5c' sind auf Planetenbolzen an dem Planetenträger 5a' drehbar gelagert. Die Sonnenräder 5d' und 5e' sind rotationsfest mit den Abtriebswellen 12 bzw. 22 verbunden. Der Planetenträger 5a' und die Sonnenräder 5d' und 5e' sind drehbar in der Antriebsvorrichtung 1 gelagert.

In Figur 6a sind Kupplung 113, Bremse 112 und die Ein- und Ausrückvorrichtung 111 als Ausschnitt der Figur 6 dargestellt.

Die Kupplung 113 weist einen Konus 113a auf, an dem eine Reibfläche 113b ausgebildet ist. Außerdem ist die Kupplung 13 mit einem Kupplungsglied (127') in Form einer Schiebemuffe 127 versehen, der eine Reibfläche 113c drehmomentfest zugeordnet ist. Die Reibfläche 113c ist konisch und korrespondiert hinsichtlich der Geometrie und des Reibverhaltens mit der Reibfläche 113b und liegt dieser axial gegenüber. Der Konus 113a, die Reibflächen 113b und 113c und die Schiebemuffe 127 sind konzentrisch zur Rotationsachse 10 angeordnet. Der Konus 113a ist mit der Antriebswelle 9 drehmomentfest gekoppelt.

Die Bremse 112 weist eine Konus 112a auf, an dem eine konische Reibfläche 112b ausgebildet ist. Der Reibfläche 12b liegt eine der Schiebemuffe 27 zugeordnete Reibfläche 112c gegenüber, die hinsichtlich Geometrie und Reibverhalten mit der Reibfläche 112b korrespondiert. Der Konus 112a und die Reibflächen 112b und 112c sind konzentrisch zur Rotationsachse 10 ausgerichtet. Der Konus 112a ist drehmomentfest gegenüber der Umgebung, also gegenüber dem Gehäuse 6. Die Reibfläche 112b ist dem Konus 112a drehmomentfest zugeordnet.

Die Schiebemuffe 127 ist drehmomentfest aber längs entlang der Rotationsachse 10 verschiebbar mit einer dritten Anschlusswelle 29 verbunden, die das Hohlrad 3d des ersten Planetentriebs 3 ist. Die ringförmig ausgebildete Schiebemuffe 127 weist außenumfangsseitig eine Ringnut 127a auf, in die ein Schaltfinger 124a des Stellwandlers 124 eingreift. Der Schaltfinger 124a ist in der Ringnut 127a über ein doppelt in beide Längsrichtungen der Rotationsachse 10 wirkendes Axiallager 129 abgestützt. Das Axiallager 129 kann alternativ ein Radialrillenkugellager, ein doppelreihiges Schrägkugellager oder ein Vierpunktlager sein.

Der Stellantrieb 123 der Ein- und Ausrückvorrichtung 111 ist eine elektrische Maschine und weist als Antriebswelle 123b die Rotorwelle des Elektromotors auf. Mit der Antriebswelle 123b ist ein Zahnrad 126a der getrieblichen Verbindung 26 drehmomentfest verbunden. Das Zahnrad 126a steht im Zahneingriff mit einem weiteren Zahnrad 126b der getrieblichen Verbindung, welches fest auf einer Zwischenwelle 111a sitzt. Die Zwischenwelle 111a ist drehmomentfeste Verbindung zwischen dem Zahnrad 126b und einem Zahnrad 125a der getrieblichen Verbindung 125 und ist mit Abstand achsparallel zur Rotationsachse 10 ausgerichtet, kann alternativ aber auch quer zu dieser ausgerichtet sein. In diesem Fall sind die Zahnräder Kegelräder, während die Zahnräder 126a, 126b, 125a und 125b Stirnräder sind. Das Zahnrad 125a steht im Zahneingriff mit dem Zahnrad 25b, welches drehmomentfest auf dem Außenumfang einer Wälze 124b des Stellwandlers 124 sitzt. Die Walze 124b ist konzentrisch zur Rotationsachse 10 ausgerichtet und weist eine Führungsbahn 124c auf, die im Wesentlichen umfangsseitig der Walze 124b verläuft, jedoch in die Längsrichtungen, d.h. richtungsgleich zur Rotationsachse 10 kurvenförmig ausgelenkt ist

Die Schiebemuffe 127 kann ausgehend von der in den Figuren 6 und 6a gezeigten Neutralposition axial, also längs mit der Rotationsachse 10 gleichgerichtet entweder gegen den Konus 113a oder gegen den Konus 112a verschoben werden. Dazu wird der Stellantrieb 123 angetrieben. Die Antriebswelle 123a schwenkt oder rotiert und treibt über die getrieblichen Verbindungen 126 und 125 die Walze 124b an, welche dadurch um die Rotationsachse 10 schwenkt oder rotiert. Die Führungsbahn 124c bewegt sich gegenüber dem Schaltfinger 124a, der der Kurvenbahn der Führungsbahn 124a angepasst längs zwangsbewegt wird und die Schiebemuffe 127 in Längsrichtung mitnimmt.

Ein erster Gang wird eingelegt, in dem die Reibflächen 112b und 112c miteinander in Reibschluss gebracht werden und eine Wirkverbindung zwischen der dritten Anschlusswelle 29 und dem Gehäuse 6 hergestellt wird, wodurch das Hohlrad 3d dadurch gegenüber dem Gehäuse 6 festgehalten ist. Bei Rotation der Antriebswelle 9 um die Rotationsachse 10 rotiert das Sonnenrad 3a, welches die Planetenräder 3c um ihre eigene Rotationsachse rotierend antreibt. Die Planetenräder 3c stützen sich an der Innenverzahnung des Hohlrades 3d ab und laufen mit radialem Abstand um die Rotationsachse um, so dass der Planetenträger 3b um die Rotationsachse 10 in Rotation versetzt wird und dadurch das Sonnenrad 4a antreibt.

In der Neutralstellung sind die der Schiebemuffe zugeordneten Reibflächen 12c und 13c vom Reibkontakt mit dem jeweiligen Reibpartner frei.

Ein zweiter Gang wird geschaltet, in dem die Reibflächen 13b und 13c miteinander in Reibkontakt gebracht werden. Eine Wirkverbindung zwischen der ersten Anschlusswelle 15 und der dritten Anschlusswelle wird hergestellt. Dadurch werden das Sonnenrad 3a und das Hohlrad 3d miteinander drehmomentfest verbunden. Da sich das Sonnenrad 3a und das Hohlrad 3d nicht mehr relativ zueinander drehen können, ist die Wirkung des ersten Planetentriebs 3 aufgehoben. Die Antriebswelle 9 treibt das Sonnenrad 3a und das Hohlrad 3d in gleicher Rotationsrichtung um die Rotationsachse 10 an, wodurch der Planetenträger 3b mitgenommen wird und das Sonnenrad 4a antreibt.

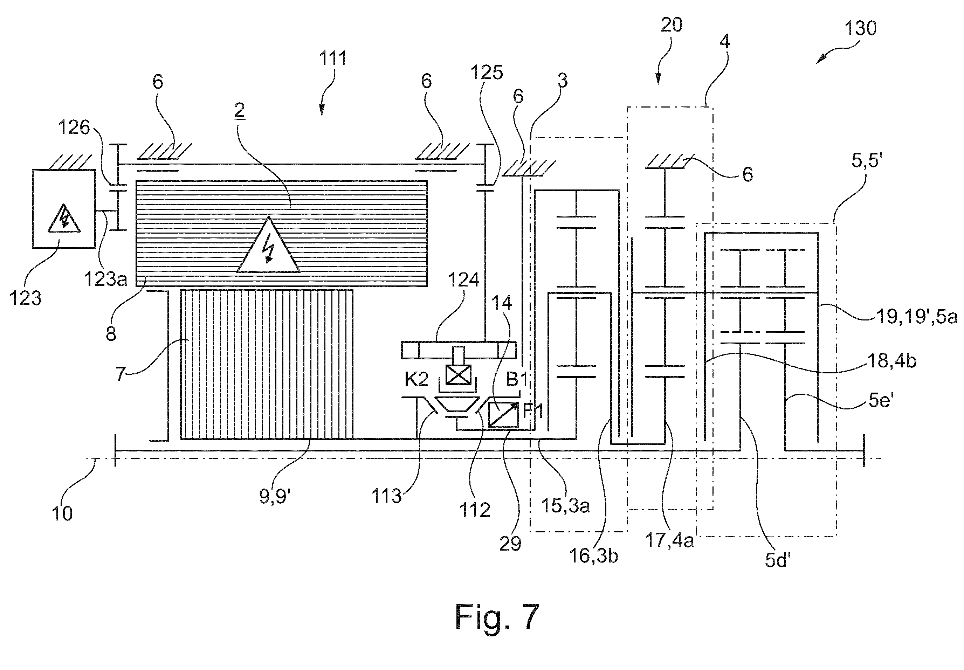

### 6. Antriebsvorrichtung 130, Figuren 7, 1b- 1c und 6a

Figur 7 zeigt eine Antriebsvorrichtung 130, die grundsätzlich gleich aufgebaut ist und funktioniert wie die Antriebsvorrichtung 110 nach Figur 6. Die Antriebsvorrichtung 130 weist jedoch im Unterschied zur Antriebsvorrichtung 110 zusätzlich einen Freilauf 14 (F1) auf, der konzentrisch zur Rotationsachse 10 neben der Bremse 112 angeordnet ist und außen gegenüber dem Gehäuse 6 drehmomentfest abgestützt ist. Innen sitzt der Freilauf 14 drehmomentfest auf der dritten Anschlusswelle 29. Der Freilauf 14 blockiert beim Hochschalten vom ersten Gang in den zweiten Gang solange, bis die Reibflächen 113b und 113c miteinander Reibkontakt eingehen. Der Freilauf 14 läuft frei, wenn Reibkontakt zwischen den Reibflächen 113b und 113c besteht.

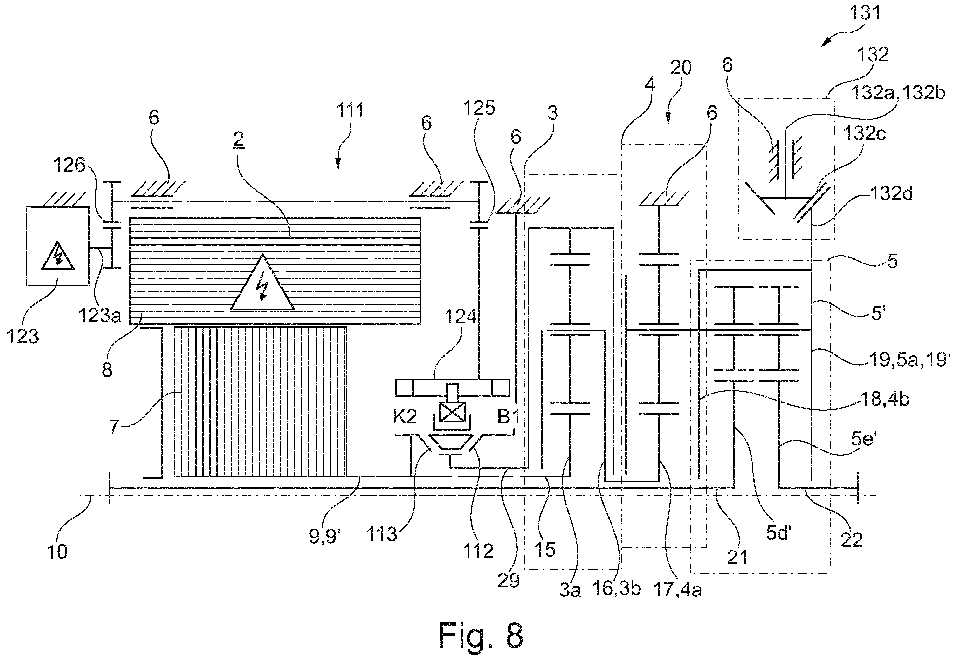

### 7. Antriebsvorrichtung 131, Figuren 8, 1a -1c und Figur 6a

Die Antriebsvorrichtungen 110 und 130 sind von weiteren Antrieben unabhängige Antriebsvorrichtungen. Figur 8 dagegen zeigt eine Antriebsvorrichtung 131, in die mit zwei Antrieben unabhängig voneinander oder zusammenwirkend Antriebsleistungen in die Antriebsvorrichtung 131 eingebracht werden kann. Einer der Antriebe ist die elektrische Maschine 2, der andere Antrieb kann ein Verbrennungsmotor oder eine weitere elektrische Maschine sein. Die Antriebsleistung des zuletzt genannten und in Figur 8 nicht dargestellten Antriebs wird über einen Winkeltrieb 132 in die Antriebsvorrichtung 131 eingebracht. Der Winkeltrieb 132 weist eine Ritzelwelle 132a auf, die um die eigene Rotationsachse 132b rotierbar zum Beispiel in dem Gehäuse 6 gelagert ist. Die Rotationsachse 132b ist quer zur Rotationsachse 10 gerichtet. Auf der Ritzelwelle 132a sitzt drehmomentfest ein Ritzel 132c, welches mit einem Tellerrad 132d im Zahneingriff steht. Das Tellerrad 132d ist wahlweise drehmomentfest am Planetenträger 4b oder am Planetenträger 5a' befestigt.

**Bezugszeichen**

| | | | |
|---|---|---|---|
| 1 | Antriebsvorrichtung | 29 | dritte Anschlusswelle |
| 2 | elektrische Maschine | 30 | Antriebsvorrichtung |
| 3 | erster Planetentrieb | 31 | Zweigang-Planetengetriebe |
| 3a | Sonnenrad | 32 | erster Planetentrieb |
| 3b | Planetenträger | 32a | Sonnenrad |
| 3c | Planet | 32b | Planetenträger |
| 3d | Hohlrad | 32c | Reibfläche |
| 4 | zweiter Planetentrieb | 32d | Hohlrad |
| 4a | Sonnenrad | 33 | Schaltblock |
| 4b | Planetenträger | 34 | Kupplung |
| 4c | Planet | 34a | Kupplungselement |
| 4d | Hohlrad | 35 | Betätigungsblock |
| 5/5' | Differenzial/Planetendifferenzial | 36 | Ansteuerung |
| 5a/5a' | Differenzialkorb/Planetenträger | 36a | Aktor |
| 5b/5b' | Ausgleichsrad/Planet | 36b | Geberzylinder |
| 5c/5c' | Ausgleichsrad/Planet | 36c | Druckkolben |
| 5d/5d' | Abtriebsrad/Sonnenrad | 36d | Mehrwegeventil |
| 5e/5e' | Abtriebsrad/Sonnenrad | 37 | Kanal |
| 6 | Gehäuse | 38 | - |
| 6a | Gehäuseabschnitt | 39 | - |
| 6b | Gehäuseabschnitt | 40 | Antriebsvorrichtung |
| 6c | Gehäuseabschnitt | 41 | Zweigang-Planetentrieb |
| 6d | Zwischenwand | 42 | erster Planetentrieb |
| 7 | Rotor | 43 | Freilaufkupplung |
| 8 | Stator | 44 | Antriebsvorrichtung |
| 9/9' | Rotorwelle/Antriebswelle | 45 | Winkeltrieb |
| 10 | Rotationsachse | 45a | Ritzel |
| 11 | Lagerstelle | 45b | Tellerrad |
| 12 | Bremse | 45c | Ritzelwelle |
| 12a | Bremsscheibe | 110 | Antriebsvorrichtung |
| 12b | Reibfläche | 111 | Ein- und Ausrückvorrichtung |
| 12c | Druckplatte | 111a | Zwischenwelle |
| 12d | Druckfeder | 112 | Bremse |
| 13 | Kupplung | 112a | Konus |
| 13a | Kupplungselement | 112b | Reibfläche |
| 13b | Druckplatte | 112c | Reibfläche |
| 13c | Druckfeder | 113 | Kupplung |
| 14 | Freilaufkupplung | 113a | Konus |
| 15 | erste Anschlusswelle | 113b | Reibfläche |
| 16 | zweite Anschlusswelle | 113c | Reibfläche |
| 17 | Anschlusswelle | 123 | Stellantrieb |
| 18 | Anschlusswelle | 123a | Achse |
| 19 | Anschlusswelle | 123b | Antriebswelle |
| 20 | Zweigang-Planetengetriebe | 124 | Stellwandler |
| 21 | Antriebswelle | 124a | Schaltfinger |
| 22 | Antriebswelle | 124b | Walze |
| 23 | Betätigungseinrichtung | 124c | Führungsbahn |
| 23a | Aktor | 125 | getriebliche Verbindung |
| 23b | Geberzylinder | 125a | Zahnrad |
| 23c | Druckkolben | 125b | Zahnrad |
| 23d | Kanal | 126 | getriebliche Verbindung |
| 23e | Druckkammer | 126a | Zahnrad |
| 23f | Kolben | 126b | Zahnrad |
| 23g | Gebereinrichtung | 127'/127 | Kupplungsglied/Schiebemuffe |
| 24 | Ausrücklager | 127a | Ringnut |
| 25 | Betätigungseinrichtung | 128 | - |
| 25a | Aktor | 129 | Axiallager |
| 25b | Geberzylinder | 130 | Antriebsvorrichtung |
| 25c | Druckkolben | 131 | Antriebsvorrichtung |
| 25d | Kanal | 132 | Winkeltrieb |
| 25e | Druckkammer | 132a | Ritzelwelle |
| 25f | Kolben | 132b | Rotationsachse |
| 25g | Gebereinrichtung | 132c | Ritzel |
| 26 | Ausrücklager | 132d | Tellerrad |
| 27 | Betätigungsblock | | |
| 28 | Schaltblock | | |

## Patentansprüche

1. Antriebsvorrichtung (1, 30, 40, 44, 110, 130, 131) mit wenigstens einer elektrischen Maschine (2), mit mindestens einem Planetentrieb (3), mit einem Differenzial (5) und mit einer um eine Rotationsachse (10) Drehmomente übertragenden Wirkverbindung zwischen einer Antriebswelle (9) der elektrischen Maschine (2) und dem Planetentrieb (3) und einer weiteren Drehmomente übertragenden Wirkverbindung zwischen dem Planetentrieb (3) und dem Differenzial (5), wobei der Planetentrieb (3) zumindest aus einer ersten Anschlusswelle (15), einer zweiten Anschlusswelle (16), aus wenigstens einem Satz Planeten (3c) an der zweiten Anschlusswelle (16) und aus einer dritten Anschlusswelle (29) gebildet ist, wobei die Antriebswelle (9) und die erste Anschlusswelle (15) des Planetentriebs (3) auf der Rotationsachse (10) koaxial zueinander ausgerichtet sind, wobei mit einer ein- und ausrückbare Kupplung (13, 113) zwischen zwei der Anschlusswellen (15, 16, 29) des Planetentriebs (3) eine um die Rotationsachse (10) Drehmomente übertragende Wirkverbindung zwischen den zwei Anschlusswellen (15, 16, 29) ein- und ausrückbar herstellbar ist,
**gekennzeichnet durch** eine konzentrisch und radial außenliegend zur Kupplung angeordnete Bremse (12, 112) zwischen einer der Anschlusswellen (29) und einem Gehäuse (6), mittels der die Anschlusswelle (29) gegenüber dem Gehäuse (6) abbremsbar und festlegbar ist.

2. Antriebsvorrichtung nach Anspruch 1, **dadurch gekennzeichnet, dass** zwischen der Antriebswelle (9) und einer der Anschlusswellen (15), mittels der über die Kupplung (13, 113) eine Drehmomente übertragende Wirkverbindung mit einer anderen Anschlusswelle (16, 29) herstellbar ist, eine permanente Drehmomente übertragende Verbindung ausgebildet ist.

3. Antriebsvorrichtung nach Anspruch 1, **dadurch gekennzeichnet, dass** die erste Anschlusswelle (15) ein Sonnenrad (3a) ist, welches im Zahneingriff mit wenigstens einem Satz Planetenrädern (3c) steht und dass die zweite Anschlusswelle (16) ein Planetenträger (3b) ist, an welchem die Planetenräder (3c) um eigene Rotationsachsen (10) drehbar gelagert sind und dass die dritte Anschlusswelle (29) ein Hohlrad (3d) mit wenigstens einer Innenverzahnung ist, mit der die Planetenräder (3c) im Zahneingriff stehen.

4. Antriebsvorrichtung nach Anspruch 3, **dadurch gekennzeichnet, dass** die Kupplung (13, 113) zwischen der ersten Anschlusswelle (15) und der zweiten Anschlusswelle (16) angeordnet ist.

5. Antriebsvorrichtung nach Anspruch 1, 2, 3 oder 4, **dadurch gekennzeichnet, dass** die Antriebswelle (9) und die erste Anschlusswelle (15) Drehmomente übertragend permanent miteinander verbunden sind.

6. Antriebsvorrichtung nach Anspruch 3, **dadurch gekennzeichnet, dass** die Kupplung (13, 113) zwischen der zweiten Anschlusswelle (16) und der dritten Anschlusswelle (29) angeordnet ist.

## Claims

1. Drive apparatus (1, 30, 40, 44, 110, 130, 131) having at least one electric machine (2), having at least one planetary drive (3), having a differential (5) and having an operative connection between a drive shaft (9) of the electric machine (2) and the planetary drive (3), which operative connection transmits torques about a rotational axis (10), and a further operative connection between the planetary drive (3) and the differential (5), which operative connection transmits torques, the planetary drive (3) being formed at least from a first connecting shaft (15), a second connecting shaft (16), from at least one set of planets (3c) on the second connecting shaft (16) and from a third connecting shaft (29), the drive shaft (9) and the first connecting shaft (15) of the planetary drive (3) being oriented coaxially with respect to one another on the rotational axis (10), it being possible for an operative connection which transmits torques about the rotational axis (10) to be established between the two connecting shafts (15, 16, 29) such that it can be engaged and disengaged by way of a clutch (13, 113) which can be engaged and disengaged between two of the connecting shafts (15, 16, 29) of the planetary drive (3), **characterized by** a brake (12, 112) which is arranged concentrically and so as to lie radially on the outside with respect to the clutch between one of the connecting shafts (29) and a housing (6), by means of which brake (12, 112) the connecting shaft (29) can be braked and fixed with respect to the housing (6).

2. Drive apparatus according to Claim 1, **characterized in that** a permanent connection which transmits torques is configured between the drive shaft (9) and one of the connecting shafts (15), by means of which an operative connection which transmits torques can be established to another connecting shaft (16, 29) via the clutch (13, 113).

3. Drive apparatus according to Claim 1, **characterized in that** the first connecting shaft (15) is a sun gear (3a) which is in toothed engagement with at least one set of planetary gears (3c), and **in that** the second connecting shaft (16) is a planetary carrier (3b), on which the planetary gears (3c) are mounted such that they can be rotated about their own rotational axes (10), and **in that** the third connecting shaft (29) is a hollow gear (3d) with at least one internal toothing system, with which the planetary gears (3c) are in toothed engagement.

4. Drive apparatus according to Claim 3, **characterized in that** the clutch (13, 113) is arranged between the first connecting shaft (15) and the second connecting shaft (16).

5. Drive apparatus according to Claim 1, 2, 3 or 4, **characterized in that** the drive shaft (9) and the first connecting shaft (15) are connected permanently to one another so as to transmit torques.

6. Drive apparatus according to Claim 3, **characterized in that** the clutch (13, 113) is arranged between the second connecting shaft (16) and the third connecting shaft (29).

## Revendications

1. Dispositif d'entraînement (1, 30, 40, 44, 110, 130, 131) comprenant au moins une machine électrique (2), au moins une transmission planétaire (3), un différentiel (5) et une liaison fonctionnelle transmettant les couples autour d'un axe de rotation (10) entre un arbre d'entraînement (9) de la machine électrique (2) et la transmission planétaire (3) et une liaison fonctionnelle supplémentaire transmettant les couples entre la transmission planétaire (3) et le différentiel (5), la transmission planétaire (3) étant formée au moins d'un premier arbre de raccordement (15), d'un deuxième arbre de raccordement (16), d'au moins un jeu de satellites (3c) sur le deuxième arbre de raccordement (16) et d'un troisième arbre de raccordement (29), l'arbre d'entraînement (9) et le premier arbre de raccordement (15) de la transmission planétaire (3) étant orientés coaxialement l'un par rapport à l'autre sur l'axe de rotation (10), une liaison fonctionnelle transmettant les couples autour de l'axe de rotation (10) pouvant être embrayée et débrayée entre les deux arbres de raccordement (15, 16, 29), avec un embrayage embrayable et débrayable (13, 113) entre deux des arbres de raccordement (15, 16, 29) de la transmission planétaire (3),
**caractérisé par** un frein (12, 112) situé radialement à l'extérieur et concentriquement par rapport à l'embrayage entre l'un des arbres de raccordement (29) et un boîtier (6), au moyen duquel frein l'arbre de raccordement (29) peut être freiné et fixé par rapport au boîtier (6).

2. Dispositif d'entraînement selon la revendication 1, **caractérisé en ce qu'**entre l'arbre d'entraînement (9) et l'un des arbres de raccordement (15) au moyen duquel une liaison fonctionnelle transmettant les couples peut être établie par le biais de l'embrayage (13, 113) avec un autre arbre de raccordement (16, 29) est réalisée une connexion permanente transmettant les couples.

3. Dispositif d'entraînement selon la revendication 1, **caractérisé en ce que** le premier arbre de raccordement (15) est une roue solaire (3a) qui est en engagement denté avec au moins un jeu de satellites (3c) et **en ce que** le deuxième arbre de raccordement (16) est un porte-satellites (3b) sur lequel les satellites (3c) sont supportés de manière à pouvoir tourner autour d'axes de rotation propres (10) et **en ce que** le troisième arbre de raccordement (29) est une couronne dentée (3d) avec au moins une denture intérieure, avec laquelle les satellites (3c) sont en engagement denté.

4. Dispositif d'entraînement selon la revendication 3, **caractérisé en ce que** l'embrayage (13, 113) est disposé entre le premier arbre de raccordement (15) et le deuxième arbre de raccordement (16).

5. Dispositif d'entraînement selon la revendication 1, 2, 3 ou 4, **caractérisé en ce que** l'arbre d'entraînement (9) et le premier arbre de raccordement (15) sont connectés l'un à l'autre de manière permanente en transmettant les couples.

6. Dispositif selon la revendication 3, **caractérisé en ce que** l'embrayage (13, 113) est disposé entre le deuxième arbre de raccordement (16) et le troisième arbre de raccordement (29).
